# EUROPÄISCHE PATENTSCHRIFT

(11) **EP 0 828 029 B1**
(45) Veröffentlichungstag und Bekanntmachung des Hinweises auf die Patenterteilung: **15.05.2002**
(21) Anmeldenummer: 97114059.5
(22) Anmeldetag: 14.08.1997
(51) Int. Cl.: D21G 1/00, D21G 1/02

(54) **Kalanderwalze mit einem Bezug aus eleastischem Kunststoff**
Calender roll having a cover of an elastic synthetic material
Cylindre de calandrage ayant une couverture d'une matière synthétique élastique

(30) Priorität: 04.09.1996 DE 19635845
(43) Veröffentlichungstag der Anmeldung: 11.03.1998
(73) Patentinhaber: Voith Paper Patent GmbH, 89522 Heidenheim (DE)
(72) Erfinder: Wenzel, Reinhard, 47809 Krefeld (DE); Dornfeld, Peter, 47803 Krefeld (DE)
(74) Vertreter: Knoblauch, Andreas, Dr.-Ing.

(56) Entgegenhaltungen:
- US-A- 3 074 695
- US-A- 3 447 600

## Beschreibung

Die Erfindung bezieht sich auf eine Kalanderwalze mit einem Bezug aus elastischem Kunststoff.

Derartige Walzen sind beispielsweise aus der Zeitschrift "Das Papier", Heft 10A, 1992, Seite V188 bekannt. Sie bestehen aus einem rohrförmigen Basiskörper, der an beiden Enden mit Stirnplatten versehen ist, welche die Zapfen tragen. Der Bezug aus elastischem Kunststoff ist unmittelbar auf den rohrförmigen Basiskörper aufgebracht. Diese Walzenkonstruktion erfordert dicke Rohrwandstärken, um eine ausreichende Biegesteifigkeit zu erhalten. Daher sind die Walzen schwer und teuer. Die Versteifung durch die Stirnplatten führt zu störenden Randeinflüssen. Außerdem bereitet die Abführung der Wärme aus dem elastischen Bezug, der durch die hochfrequente hohe Spaltbelastung bzw. die Kontaktwärme aus beheizten Nachbarwalzen entsteht, Probleme. mit einem zylindrischen Basiskörper, mit einem Bezug aus elastischem Kunststoff und mit einem zwischen Basiskörper und Bezug angeordneten Stützzylinder aus Leichtmetall, insbesondere Aluminium. Der Stützzylinder kann hierbei aus einzelnen Ringscheiben zusammengesetzt sein.

Der Erfindung liegt die Aufgabe zugrunde, eine Kalanderwalze anzugeben, die den Forderungen der Praxis nach geringem Eigengewicht, gutem Biegeverhalten und problemloser Kühlung besonders gut entspricht.

Diese Aufgabe wird erfindungsgemäß durch eine Kalanderwalze gelöst, mit einem zylindrischen Basiskörper, mit einem Bezug aus elastischem Kunststoff und mit einem den Bezug tragenden und am Basiskörper anliegenden Stützzylinder aus Leichtmetall, der von Kühlmittelkanälen durchsetzt ist.

Diese Kalanderwalze hat ein außerordentlich geringes Eigengewicht, weil das geringe spezifische Gewicht des Leichtmetalls und die wegen der Kühlmittelkanäle erforderliche Materialreduzierung zusammenwirken. Das Eigengewicht der Kalanderwalze liegt unterhalb demjenigen einer mit einem Papierbezug versehenen Kalanderwalze.

Des weiteren kann die Kalanderwalze über die Länge des Stützzylinders mit gleichem Querschnitt bzw. gleichem Trägheitsmoment ausgebildet werden. Sie ist frei von störenden Randeinflüssen, wie sie bei den bisher verwendeten rohrförmigen Basiskörpern unvermeidbar sind. Der Walzenballen kann extrem kurz gehalten werden. Er braucht nur so lang zu sein wie der Bezug.

Die hohe Wärmeleitfähigkeit der üblichen Leichtmetalle, insbesondere des Aluminiums, sorgt für eine gute Abführung der Wärme aus dem Bezug. Für die Kühlmittelkanäle ist in dem Stützzylinder ausreichend Platz.

Besonders günstig ist es, daß die Kühlmittelkanäle für den Durchsatz von Umgebungsluft ausgelegt und Mittel zum Antrieb der Umgebungsluft vorgesehen sind. Auf diese Weise läßt sich eine sehr einfach gestaltete, aber ausreichend leistungsfähige Kühlvorrichtung vorsehen.

Für die Ausgestaltung im einzelnen gibt es zahlreiche Möglichkeiten. Empfehlenswert ist es, daß die Kühlmittelkanäle an beiden Enden offen sind und an mindestens einer Stirnseite ein drehfest mit dem Basiskörper verbundenes Lüfterrad vorgesehen ist.

Günstig ist es auch, daß die Kühlluftkanäle an einem Ende eine Eintrittsöffnung und am anderen Ende eine Austrittsöffnung mit größerem radialen Abstand von der Walzenachse als die Eintrittsöffnung aufweist. Durch den radialen Abstand von Eintrittöffnung und Austrittsöffnung ergibt sich ein Zwangsantrieb des Kühlmittels.

Hierbei empfiehlt es sich ferner, daß an jedem Ende Eintrittsöffnungen und Austrittsöffnungen miteinander abwechseln. Dies ergibt bei benachbarten Kühlmittelkanälen eine gegenläufige Strömung und damit ein ausgeglichenes Temperaturprofil.

Eine andere bevorzugte Möglichkeit für den Antrieb der Umgebungsluft besteht darin, daß die Kühlmittelkanäle schraubenförmig verlaufen. Der schraubenförmige Verlauf hat den weiteren Vorteil, daß die Gegenwalze im Preßspalt immer nur einem Abschnitt eines Kühlmittelkanals gegenübersteht und daher sehr hohe Streckenlasten abgestützt werden können, ohne daß der Stützzylinder Verformungen erleidet.

Mit besonderem Vorteil ist dafür gesorgt, daß der Stützzylinder aus Ringscheiben besteht, die zur Bildung der Kühlmittelkanäle gleichmäßig über den Umfang verteilte Durchbrechungen aufweisen. Diese Ringscheiben lassen sich leicht herstellen. Die Durchbrechungen sorgen für eine sehr gleichmäßige Wärmeabfuhr. Form und Größe können so gewählt sein, daß einerseits ein ausreichend großer Kanalquerschnitt vorhanden ist und sich andererseits eine ausreichend stabile Abstützung ergibt.

Insbesondere können die Durchbrechungen achsparallele Bohrungen sein. Diese lassen sich besonders leicht herstellen. Sie ergeben achsparallele Kanäle, durch die Kühlluft beispielsweise mittels eines Lüfterrades hindurchgeleitet werden kann. Wenn man die Ringscheiben gegeneinander verdreht anordnet, kann man mit den achsparallelen Bohrungen Kühlmittelkanäle erzeugen, die annähernd längs einer Schraubenlinie verlaufen, was zu einem Antrieb der Kühlluft führt.

Solche schraubenlinienförmigen Kühlmittelkanäle können noch besser mit Hilfe von Schrägbohrungen in den Ringscheiben erzeugt werden.

Von Vorteil ist es auch, daß der Stützzylinder aus identischen Ringscheiben besteht. Dies erleichtert die Herstellung. Außerdem werden an beiden Enden offene Kühlmittelkanäle erzeugt, die für die Kühlung durch Umgebungsluft besonders geeignet sind.

Eine günstige Verbindung ergibt sich, wenn die Ringscheiben auf dem Basiskörper aufgeschrumpft sind. Stattdessen können die Ringscheiben auch auf dem Basiskörper aufgeklebt sein. Eine weitere Möglichkeit besteht darin, daß die Ringscheiben formschlüssig mit dem Basiskörper verbunden sind, beispielsweise durch Nut und Feder.

Um einen einheitlichen Stützzylinder zu erhalten, empfiehlt es sich auch, die Ringscheiben miteinander zu verkleben.

Statt dessen können die Ringscheiben auch durch stirnseitig angeordnete Bordscheiben mit Hilfe von Muttern gegeneinander gepreßt sein. Diese Maßnahme ist besonders dann vorteilhaft, wenn Stützzylinder und elastischer Bezug anstelle eines aus Faserstoffscheiben bestehenden Bezuges auf einen Basiskörper aufgebracht werden sollen, wie dies für Umbauten unter Verwendung vorhandener Papierwalzen-Basiskörper der Fall ist.

Hierbei ist es günstig, daß die Bordscheiben in gleicher Weise wie die Ringscheiben zur Bildung der Kühlmittelkanäle durchbrochen sind.

Die besten Ergebnisse haben sich gezeigt, wenn der Stützzylinder im wesentlichen aus Aluminium besteht. Dieses Material hat ein geringes spezifisches Gewicht, eine gute Stabilität und eine für die Wärmeabfuhr wichtige hohe Wärmeleitfähigkeit.

Die Erfindung wird nachstehend anhand in der Zeichnung dargestellter, bevorzugter Ausführungsbeispiele näher erläutert. Es zeigen:
- Fig. 1: eine Kalanderwalze gemäß der Erfindung im Längsschnitt,
- Fig. 2: ein Querschnitt längs der Linie A-A in Fig. 1,
- Fig. 3: eine abgewandelte Ausführungsform einer erfindungsgemäßen Kalanderwalze im Längsschnitt, wobei die schraubenförmig verlaufenden Kühlmittelkanäle als achsparallel eingezeichnet sind, und
- Fig. 4: einen abgewickelten Zylinderschnitt in Höhe der Kühlmittelkanäle mit deren tatsächlichem Verlauf und
- Fig. 5: einen Teil-Längsschnitt durch eine weitere Ausführungsform.

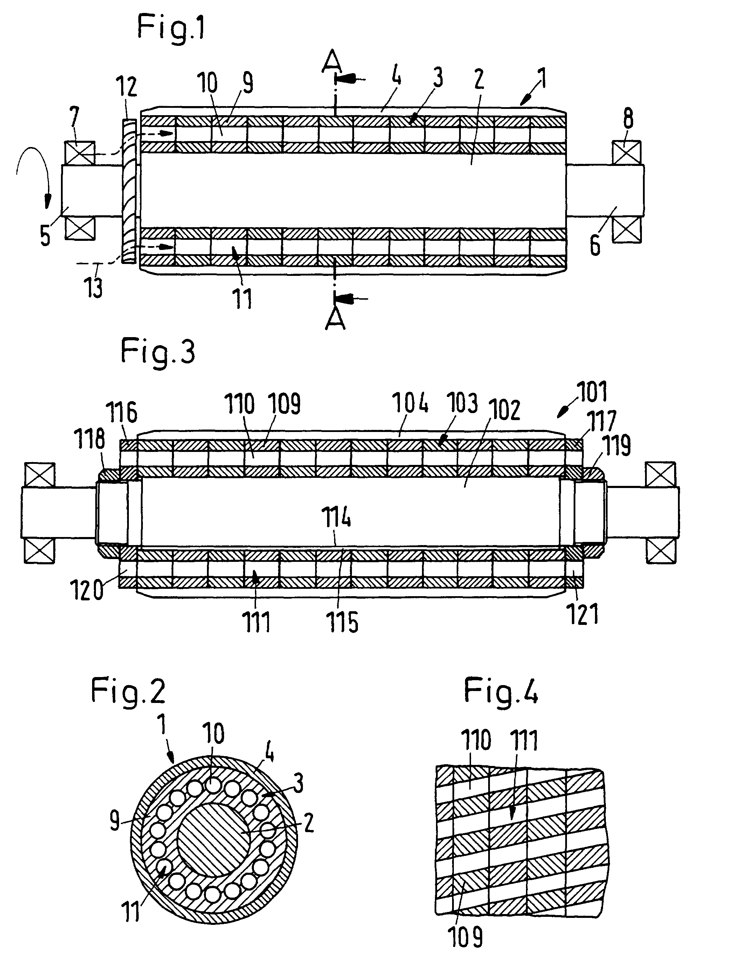

In Fig. 1 ist eine Kalanderwalze 1 veranschaulicht, die einen zylindrischen Basiskörper 2, einen Stützzylinder 3 aus Aluminium und einen Bezug 4 aus elastischem Kunststoff aufweist. Der Basiskörper 2 dient als Achse, die an beiden Enden mit einem Zapfen 5 bzw. 6 versehen ist, der in Lagern 7 bzw. 8 angeordnet ist.

Der Basiskörper 2 besteht aus Stahl, der Stützkörper 3 aus Aluminium und der elastische Bezug 4 aus faserverstärktem Kunststoff, wie Epoxidharz oder einem ähnlichen Material.

Der Stützzylinder 3 ist aus einzelnen Ringscheiben 9 zusammengesetzt, die auf den Basiskörper 2 aufgeschrumpft sind. Die gesamte Breite des Basiskörpers 2 ist mit diesen Ringscheiben 9 besetzt, so daß wegen der geringen Randeinflüsse die nutzbare Arbeitsbreite bis nahe an die Stirnseiten des Basiskörpers 2 reicht. Jede Ringscheibe 9 besitzt eine Vielzahl von achsparallelen Bohrungen 10, die insgesamt Kühlmittelkanäle 11 bilden. Diese Bohrungen sind in großer Zahl - insbesondere 10 bis 30 - gleichmäßig über den Umfang verteilt. Diese so gebildeten Hohlräume reduzieren das Gewicht des Stützzylinders 3, das bereits wegen des Aluminiums gering ist, nochmals.

Mit dem Basiskörper 2 ist ein Lüfterrad 12 verbunden, das sich nahe einer Stirnseite des Stützzylinders 3 befindet. Bei einer Rotation der Kalanderwalze 1 fördert das Lüfterrad 12 Umgebungsluft längs der Strömungspfade 13 in die Kühlmittelkanäle 11. Hierdurch und wegen der guten Wärmeleitfähigkeit des Aluminiums wird überschüssige Wärme rasch und sicher aus dem Bezug 4 abgeführt.

Bei der Ausführungsform der Fig. 3 und 4 werden für entsprechende Teile um 100 gegenüber Fig. 1 und 2 erhöhte Bezugszahlen verwendet.

Die Ringscheiben 109 sind formschlüssig mit dem Basiskörper 102 verbunden. Den Formschluß bewirkt eine an sich bekannte Nut-Feder-Verbindung, von der eine Nut 114 und eine Feder 115 in Fig. 3 lediglich angedeutet sind. Stirnseitig sind zwei Bordscheiben 116 bzw. 117 vorgesehen, die mit Hilfe von Muttern 118 bzw. 119 dazu dienen, die Ringscheiben 109 axial gegeneinander zu pressen. Diese Bordscheiben sind mit Durchbrechungen 120 bzw. 121 versehen, welche die Kühlmittelkanäle 111 ergänzen.

Wie Fig. 4 zeigt, verlaufen die Kühlmittelkanäle 111 nicht achsparallel, sondern schräg. Die entsprechenden Schrägbohrungen 110 in jeder Ringscheibe 109 ergänzen einander zu dem schraubenförmigen Verlauf. Dieser führt bei Rotation der Kalanderwalze 101 zu einem Antrieb der in den Kühlmittelkanälen 111 befindlichen Luft.

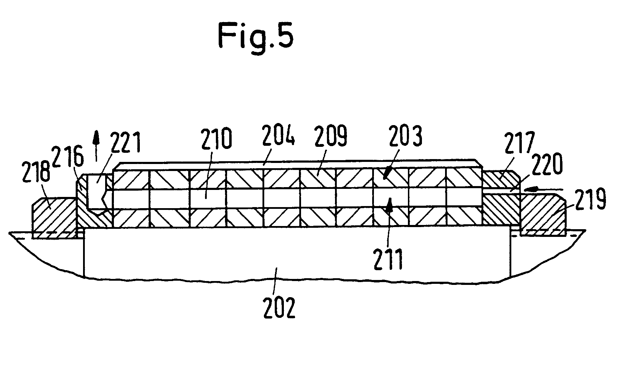

Bei der Ausführungsform nach Fig. 5 werden für entsprechende Teile um 200 gegenüber den Fig. 1 und 2 erhöhte Bezugszahlen verwendet.

Bei dieser Ausführungsform wird die Luftströmung durch die Kühlmittelkanäle 211 nicht durch ein Lüfterrad 12 sondern dadurch bewirkt, daß jeder Kühlkanal 211 eine Eintrittsöffnung 220 und eine radial weiter außen liegende Austrittsöffnung 221 besitzt. Dies läßt sich auf einfache Weise dadurch bewirken, daß die Eintrittsöffnung 220 durch eine achsparallele Bohrung in der Bordscheibe 217 und die Austrittsöffnung als radiale Bohrung in der Bordscheibe 216 ausgeführt ist. Die so entstehende Zwangsluftströmung ist durch Pfeile angedeutet.

Darüber hinaus wechseln in beiden Bordscheiben 216 und 217 die Eintrittsöffnungen 220 und Austrittsöffnungen 221 miteinander ab, so daß in benachbarten Kühlmittelkanälen 211 jeweils eine gegenläufige Strömung herrscht und sich insgesamt ein ausgeglichenes Temperaturprofil an der Oberfläche ergibt.

Die Ringscheiben 209 und die Bordscheiben 217 und 218 werden wie in Fig. 3 durch Muttern 218 und 219 gegeneinander gepreßt. Die Drehsicherung kann durch eine Nut-Feder-Verbindung oder auch durch Aufschrumpfen der Ringscheiben 209 auf dem Basiskörper 202 erfolgen.

Abwandlungen von den dargestellten Ausführungsformen sind in vielfacher Hinsicht möglich, ohne den Grundgedanken der Erfindung zu verlassen. Beispielsweise können die Ringscheiben 9 auch miteinander und/oder mit dem Basiskörper 2 verklebt sein. Die Querschnittsform der Kühlmittelkanäle 11 kann von der Kreisform abweichen und Gestaltungen annehmen, die aus Gründen der Festigkeit, des Deformationsverhaltens oder der Strömungstechnik wünschenswert sind.

## Patentansprüche

1. Kalanderwalze mit einem zylindrischen Basiskörper (2; 102; 202), mit einem Bezug (4; 104; 204) aus elastischem Kunststoff und mit einem den Belag tragenden und am Basiskörper (2; 102; 202) anliegenden Stützzylinder (3; 103; 203) aus Leichtmetall, der von Kühlmittelkanälen (11; 111; 211) durchsetzt ist.

2. Kalanderwalze nach Anspruch 1, **dadurch gekennzeichnet, daß** die Kühlmittelkanäle (11; 111; 211) für den Durchsatz von Umgebungsluft ausgelegt und Mittel zum Antrieb der Umgebungsluft vorgesehen sind.

3. Kalanderwalze nach Anspruch 2, **dadurch gekennzeichnet, daß** die Kühlmittelkanäle (11) an beiden Enden offen sind und an mindestens einer Stirnseite ein drehfest mit dem Basiskörper (2) verbundenes Lüfterrad (12) vorgesehen ist.

4. Kalanderwalze nach Anspruch 2, **dadurch gekennzeichnet, daß** die Kühlluftkanäle (211) an einem Ende eine Eintrittsöffnung (220) und am anderen Ende eine Austrittsöffnung (221) mit größerem radialen Abstand von der Walzenachse als die Eintrittsöffnung aufweist.

5. Kalanderwalze nach Anspruch 4, **dadurch gekennzeichnet, daß** an jedem Ende Eintrittsöffnungen (220) und Austrittsöffnungen (221) miteinander abwechseln.

6. Kalanderwalze nach einem der Ansprüche 1 bis 5, **dadurch gekennzeichnet, daß** die Kühlmittelkanäle (111) schraubenförmig verlaufen.

7. Kalanderwalze nach einem der Ansprüche 1 bis 6, **dadurch gekennzeichnet, daß** der Stützzylinder (3; 103; 203) aus Ringscheiben (9; 109; 209) besteht, die zur Bildung der Kühlmittelkanäle (11; 111; 211) gleichmäßig über den Umfang verteilte Durchbrechungen (Bohrungen 10; 110; 210) aufweisen.

8. Kalanderwalze nach Anspruch 7, **dadurch gekennzeichnet, daß** die Durchbrechungen achsparallele Bohrungen (10; 210) sind.

9. Kalanderwalze nach Anspruch 7, **dadurch gekennzeichnet, daß** die Durchbrechungen Schrägbohrungen (110) sind.

10. Kalanderwalze nach einem der Ansprüche 7 bis 9, **dadurch gekennzeichnet, daß** der Stützzylinder (3; 103; 203) aus identischen Ringscheiben besteht.

11. Kalanderwalze nach einem der Ansprüche 7 bis 10, **dadurch gekennzeichnet, daß** die Ringscheiben (9) auf dem Basiskörper (2) aufgeschrumpft sind.

12. Kalanderwalze nach einem der Ansprüche 7 bis 10, **dadurch gekennzeichnet, daß** die Ringscheiben (9) auf dem Basiskörper (2) aufgeklebt sind.

13. Kalanderwalze nach einem der Ansprüche 7 bis 10, **dadurch gekennzeichnet, daß** die Ringscheiben (109) formschlüssig mit dem Basiskörper (102) verbunden sind.

14. Kalanderwalze nach einem der Ansprüche 7 bis 13, **dadurch gekennzeichnet, daß** die Ringscheiben (9) miteinander verklebt sind.

15. Kalanderwalze nach einem der Ansprüche 7 bis 14, **dadurch gekennzeichnet, daß** die Ringscheiben (109) durch stirnseitig angeordnete Bordscheiben (116, 117; 216, 217) mit Hilfe von Muttern (118, 119; 218, 219) gegeneinander gepreßt sind.

16. Kalanderwalze nach Anspruch 15, **dadurch gekennzeichnet, daß** die Bordscheiben (116, 117) in gleicher Weise wie die Ringscheiben (109) zur Bildung der Kühlmittelkanäle (111) durchbrochen sind.

17. Kalanderwalze nach einem der Ansprüche 1 bis 16, **dadurch gekennzeichnet, daß** der Stützzylinder (3; 103; 203) im wesentlichen aus Aluminium besteht.

## Claims

1. Calender roller with a cylindrical basic body (2; 102; 202), with a cover (4; 104; 204) made of elastic plastics material and with a supporting cylinder (3; 103; 203) made of light metal, carrying the covering and fitting closely to the basic body (2; 102; 202), interspersed with coolant channels (11; 111; 211).

2. Calender roller according to Claim 1, **characterised in that** the coolant channels (11; 111; 211) are configured for the throughput of ambient air and means are provided for driving the ambient air.

3. Calender roller according to Claim 2, **characterised in that** the coolant channels (11) are open at both ends and on at least one front end a ventilator wheel (12) is provided, connected as secure against rotation to the basic body (12).

4. Calender roller according to Claim 2, **characterised in that** the cool air channels (211) have at one end an entrance orifice (220) and at the other end an exit orifice (221) at a larger radial distance from the roller axis than the entrance orifice.

5. Calender roller according to Claim 4, **characterised in that** entrance orifices (220) and exit orifices (221) alternate with one another at each end.

6. Calender roller according to one of Claims 1 to 5, **characterised in that** the coolant channels (111) run helically.

7. Calender roller according to one of Claims 1 to 6, **characterised in that** the supporting cylinder (3; 103; 203) consists of annular discs (9; 109; 209), which have openings (bores 10; 110; 210) distributed evenly over the circumference, for forming the coolant channels (11; 111; 211).

8. Calender roller according to Claim 7, **characterised in that** the openings are bores (10; 210) parallel to the axis.

9. Calender roller according to Claim 7, **characterised in that** the openings are crosswise bores (110).

10. Calender roller according to one of Claims 7 to 9, **characterised in that** the supporting cylinder (3; 103; 203) consists of identical annular discs.

11. Calender roller according to one of Claims 7 to 10, **characterised in that** the annular discs (9) are shrunk on to the basic body (2).

12. Calender roller according to one of Claims 7 to 10, **characterised in that** the annular discs (9) are glued on to the basic body (2).

13. Calender roller according to one of Claims 7 to 10, **characterised in that** the annular discs (109) are connected by positive locking to the basic body (102).

14. Calender roller according to one of Claims 7 to 13, **characterised in that** the annular discs (9) are glued to one another.

15. Calender roller according to one of Claims 7 to 14, **characterised in that** the annular discs (109) are pressed against one another by flanged wheels (116, 117; 216, 217), arranged at the front end, with the aid of nuts (118, 119; 218, 219).

16. Calender roller according to Claim 15, **characterised in that** the flanged wheels (116, 117) are broken through in the same way as the annular discs (109) to form the coolant channels (111).

17. Calender roller according to one of Claims 1 to 16, **characterised in that** the supporting cylinder (3; 103; 203) substantially consists of aluminium.

## Revendications

1. Cylindre de calandrage comportant un corps de base cylindrique (2 ; 102 ; 202) avec un revêtement (4 ; 104 ; 204) en matière plastique élastique, et un cylindre de soutien (3 ; 103 ; 203) en métal léger portant le revêtement et s'appliquant contre le corps de base (2 ; 102 ; 202), lequel est traversé par des canaux d'agent de refroidissement (11 ; 111 ; 211).

2. Cylindre de calandrage selon la revendication-1, **caractérisé en ce que** les canaux d'agent de refroidissement (11 ; 111 ; 211) sont conçus pour le passage d'air ambiant, et **en ce qu'**il est prévu des moyens pour l'entraînement de l'air ambiant.

3. Cylindre de calandrage selon la revendication 2, **caractérisé en ce que** les canaux d'agent de refroidissement (11) sont ouverts au niveau des deux extrémités, et **en ce que**, sur l'une au moins des faces frontales, il est prévu une roue de ventilateur (12) qui est reliée solidairement au corps de base (2).

4. Cylindre de calandrage selon la revendication 2, **caractérisé en ce que** les canaux d'air de refroidissement (211) comportent sur l'une de leurs extrémités un orifice d'entrée (220), et sur l'autre extrémité un orifice de sortie (221) qui est situé à un écartement radial plus important de l'axe du cylindre que l'orifice d'entrée.

5. Cylindre de calandrage selon la revendication 4, **caractérisé en ce que**, sur chaque extrémité, des orifices d'entrée (220) et des orifices de sortie (221) s'alternent les uns avec les autres.

6. Cylindre de calandrage selon l'une quelconque des revendications 1 à 5, **caractérisé en ce que** les canaux d'agent de refroidissement (111) s'étendent de façon hélicoïdale.

7. Cylindre de calandrage selon l'une quelconque des revendications 1 à 6, **caractérisé en ce que** le cylindre de soutien (3 ; 103 ; 203) est constitué de disques annulaires (9 ; 109 ; 209) qui, pour la formation des canaux d'agent de refroidissement (11 ; 111 ; 211), comportent des perforations (perçages 10 ; 110 ; 210) réparties uniformément sur la périphérie.

8. Cylindre de calandrage selon la revendication 7, **caractérisé en ce que** les perforations sont des perçages (10 ; 210) parallèles à l'axe.

9. Cylindre de calandrage selon la revendication 7, **caractérisé en ce que** les perforations sont des perçages obliques (110)

10. Cylindre de calandrage selon l'une quelconque des revendications 7 à 9, **caractérisé en ce que** le cylindre de soutien (3 ; 103 ; 203) est constitué de disques annulaires identiques.

11. Cylindre de calandrage selon l'une quelconque des revendications 7 à 10, **caractérisé en ce que** les disques annulaires (9) sont frettés sur le corps de base (2).

12. Cylindre de calandrage selon l'une quelconque des revendications 7 à 10, **caractérisé en ce que** les disques annulaires (9) sont collés sur le corps de base (2).

13. Cylindre de calandrage selon l'une quelconque des revendications 7 à 10, **caractérisé en ce que** les disques annulaires (109) sont reliés par coopération de formes au corps de base (102).

14. Cylindre de calandrage selon l'une quelconque des revendications 7 à 13, **caractérisé en ce que** les disques annulaires (9) sont collés entre eux.

15. Cylindre de calandrage selon l'une quelconque des revendications 7 à 14, **caractérisé en ce que** les disques annulaires (109) sont pressés les uns contre les autres par des disques de bordure (116, 117 ; 216, 217) disposés en face frontale, à l'aide d'écrous (118, 119 ; 218, 219).

16. Cylindre de calandrage selon la revendication 15, **caractérisé en ce que**, pour la formation des canaux d'agent de refroidissement (111), les disques de bordure (116, 117) sont perforés de la même manière que les disques annulaires (109).

17. Cylindre de calandrage selon l'une quelconque des revendications 1 à 16, **caractérisé en ce que** le cylindre de soutien (3 ; 103 ; 203) est pour l'essentiel en aluminium.
